Europäisches Patentamt

European Patent Office

Office européen des brevets

(19)

(11) Veröffentlichungsnummer: **0 147 603**

**A2**

(12) # EUROPÄISCHE PATENTANMELDUNG

(21) Anmeldenummer: **84113803.5**

(22) Anmeldetag: **15.11.84**

(51) Int. Cl.⁴: **C 23 C 18/12**

(30) Priorität: **25.11.83 DE 3342654**

(43) Veröffentlichungstag der Anmeldung:
**10.07.85 Patentblatt 85/28**

(84) Benannte Vertragsstaaten:
**CH DE FR IT LI**

(71) Anmelder: **Ruhrchemie Aktiengesellschaft
Bruchstrasse 219
D-4200 Oberhausen 11(DE)**

(72) Erfinder: **Cornils, Boy, Dr. Dipl.-Chem.
Friedrich-Ebert-Strasse 45
D-4220 Dinslaken(DE)**

(72) Erfinder: **Kluy, Werner, Dr. Dipl.-Chem.
Clemensstrasse 12
D-4630 Beckum 1(DE)**

(72) Erfinder: **Rehberg, Gert
Hauptstrasse 9
D-4236 Hamminkeln 1(DE)**

(72) Erfinder: **Tihanyi, Béla, Dr. Dipl.-Chem.
Arndtstrasse 87
D-4200 Oberhausen 1(DE)**

(74) Vertreter: **Reichelt, Karl-Heinz, Dr.
m. Br. Ruhrchemie Aktiengesellschaft Abt. PLD Postfach
13 01 60
D-4200 Oberhausen 13(DE)**

(54) **Selektiv absorbierende Beschichtungen für Solarkollektoren.**

(57) Verwendung von Beschichtungen, die durch Aufsprühen von thermisch zersetzbaren, in organischen Lösungsmitteln gelösten Metallverbindungen mittels eines gegebenenfalls Luft oder Sauerstoff enthaltenden Trägergases auf eine erhitzte Oberfläche hergestellt werden, als Tandemschicht für die fotothermische Umwandlung von Sonnenlicht.

EP 0 147 603 A2

Croydon Printing Company Ltd

Oberhausen 11, den 23.11.1983
PLD - bin/breu

R. 1959

Ruhrchemie Aktiengesellschaft, Oberhausen 11

Selektiv absorbierende Beschichtungen für
Solarkollektoren

Die Erfindung betrifft die Verwendung von durch Aufsprühen
auf ein Substrat hergestellten Beschichtungen als Reflektor und Absorberschicht für die fotothermische Umwandlung
von Sonnenlicht.

Um einen möglichst hohen Wirkungsgrad zu erzielen, muß ein
Solarkollektor eine selektiv absorbierende Oberfläche besitzen. Diese Oberfläche soll ein möglichst hohes Absorptionsvermögen $\alpha$ und ein möglichst geringes Emissionsvermögen $\varepsilon$ im längerwelligen Bereich der elektromagnetischen
Strahlung der Sonne aufweisen. Demzufolge ist bei der Herstellung von Solarkollektoren auf die Erzeugung besonders
gut absorbierender Oberflächenschichten mit hoher Selektivität zu achten.

Derartige Schichten bestehen im allgemeinen aus einer
Kombination eines Reflektors bzw. einer Reflektorschicht,
die auch durch das Substrat gebildet werden kann, und
einer im wesentlichen für die Absorption verantwortlichen
Absorberschicht. Beschichtungen, die aus einem Reflektor
und einer Absorberschicht bestehen, nennt man auch Tandemschichten.

Um einen hohen Wirkungsgrad zu gewährleisten, arbeiten Solarkollektoren in Solarkraftwerken bei Temperaturen oberhalb 250°C. Infolge der thermischen Beanspruchung der Solarkollektoren werden an deren Beschichtungen besonders hohe Anforderungen bezüglich der Temperaturbeständigkeit bis weit über 350°C gestellt. Sie müssen temperaturstabil, selektiv absorbierend und haftfest sein und sollen eine dünne, porenfreie und gleichförmige Bedeckung der Oberfläche gewährleisten.

Der Reflektor bzw. die Reflektorschicht wird im allgemeinen durch eine metallische Schicht gebildet, während die Absorberschicht - von wenigen Ausnahmen abgesehen (Dendrit-Schichten) - aus oxidischem Material oder aus Metall und Metalloxid enthaltenden Mischungen, wie Cermetschichten, bestehen.

Die bislang bekannten selektiv absorbierenden Beschichtungen für Solarkollektoren weisen eine Reihe von Nachteilen auf, die einer praktischen Anwendung entgegenstehen. So sind Schwarzchromschichten, die mittels eines galvanischen Prozesses auf ein Substrat aufgebracht werden, nur bedingt temperaturbeständig. Oberhalb ca. 300 bis 350°C erleiden Schwarzchromschichten in zunehmendem Maße eine Degradation, die sich in einem Abbau der Struktur und einer Einebnung der Schichtoberfläche äußert. Andere Schichtarten, wie die sehr dünnen $\lambda$/4-Schichten, erfüllen zwar das Erfordernis einer geringen Schichtdicke, werden jedoch sehr leicht durch die thermische Beanspruchung unbrauchbar, da Bestandteile der Absorberschicht und des Reflektors ineinander diffundieren. Darüber hinaus steht einer wirtschaftlichen Nutzung dieses Schichttyps die sehr aufwendige Herstellung durch Aufsputtern mittels eines durch ein elektrisches Feld geführten Elektronenstrahles entgegen.

Eine weitere Art von Beschichtungen für Solarkollektoren
ist in der DE-OS 31 33 871 beschrieben. Hierbei werden
homogene Beschichtungen, die aus zwei oder mehreren Metallen und/oder Metallverbindungen bestehen, erzeugt,
indem man flüchtige, mehrkernige Metallverbindungen
beispielsweise aus der Gasphase unter Verwendung eines
Schutzgases auf einer heißen Oberfläche abscheidet. Die
Abscheidung aus der Gasphase unter Verwendung von Argon
als Schutzgas führt zu glänzenden, metallischen Schichten. Verwendet man Inertgase, wie Argon oder Stickstoff,
unter Zusatz von Sauerstoff, so werden Beschichtungen
erzielt, die überwiegend Oxide enthalten. Die angewandte Temperatur und die Geschwindigkeit des Trägergases
haben maßgeblichen Einfluß auf die Ausbildung der Schichtstruktur, da sie Keimbildung und Keimwachstum wesentlich bestimmen. Nach diesem Verfahren erzeugte Beschichtungen lassen sich allerdings nur unter Verwendung
leichtflüchtiger Metallverbindungen verwirklichen. Da
es jedoch nur wenig geeignete, leichtflüchtige Metallverbindungen gibt, ist die Einsatzmöglichkeit des Verfahrens recht eingeschränkt.

Die ebenfalls in der DE-OS 31 33 871 beschriebene Beschichtungsmethode durch Auftragen von thermisch zersetzbaren, zwei- oder mehrkernigen Metallverbindungen
in flüssiger oder suspendierter Form und anschließende
Pyrolyse des aufgebrachten Films ergibt schwarze Absorberschichten.

Derartige Beschichtungen zeigen zwar eine ideale Verteilung der unterschiedlichen Metalle innerhalb der
Schicht, wodurch die Rekristallisation unterdrückt
wird, besitzen jedoch keine hohe Selektivität bezüglich
der Absorption, da die Dicke der erzeugten Schichten
nicht beliebig gesteuert werden kann.

Die soeben geschilderten Nachteile für die fotothermische Umwandlung von Sonnenlicht werden vermieden durch Verwendung von Beschichtungen, die durch einmaliges oder mehrmaliges Aufsprühen von thermisch zersetzbaren, in organischen Lösungsmitteln oder Lösungsmittelgemischen gelösten Metallverbindungen mittels eines gegebenenfalls Luft oder Sauerstoff enthaltenden Trägergases auf eine erhitzte Oberfläche und - sofern in Abwesenheit von Sauerstoff gearbeitet wurde - gegebenenfalls nachfolgende Oxidation der besprühten Oberfläche mittels Luft oder Sauerstoff hergestellt werden, als aus Reflektor und Absorberschicht bestehender Tandemschicht für die fotothermische Umwandlung von Sonnenlicht.

Die so hergestellten Beschichtungen sind sowohl temperaturstabil als auch selektiv absorbierend und weisen eine gute Haftfestigkeit auf dem Substrat auf. Sie lassen sich dünn, porenfrei und in gleichförmiger Beschaffenheit herstellen. Die Schichtdicke kann über die Konzentration der thermisch zersetzbaren Metallverbindungen, über die Anzahl der Sprühvorgänge oder über die Dauer des Sprühvorganges gezielt eingestellt werden.

Als thermisch zersetzbare Metallverbindungen werden beispielsweise Metallcarbonyle, Metallcarboxylate und Metallalkoholate eingesetzt.

Zu den Metallen, die für eine Beschichtung geeignet sind, gehören die Übergangsmetalle des Periodensystems der Elemente, insbesondere Chrom, Molybdän, Wolfram, Kobalt, Nickel, Rhodium, Ruthenium, Platin, Palladium, Titan, Zirkon und Rhenium.

- 5 -

Zur Herstellung der Lösungsmittelgemische bzw. Lösungen, in denen die thermisch zersetzbaren Metallverbindungen gelöst enthalten sind, eignen sich organische Lösungsmittel, wie Benzol, Toluol, Xylol, Alkohole, chlorierte Kohlenwasserstoffe und insbesondere aliphatische und cycloaliphatische Ether und aliphatische Kohlenwasserstoffe.

Die zum Aufsprühen verwendeten Lösungsmittelgemische bzw. Lösungen weisen Metallgehalte zwischen 0,02 bis 8,5 Gew.-% auf. In den meisten Fällen empfiehlt es sich, Konzentrationen von 0,2 bis 1,5 Gew.-% einzuhalten.

Zu stark verdünnte Lösungen besitzen den Nachteil, daß der Arbeitsaufwand zur Herstellung größerer Schichten sehr groß ist.

Bei Verwendung von stark konzentrierten Lösungen mit einem Metallgehalt $> 8,5$ Gew.-% kann zwar die Grenzflächenspannung mit Erhöhung des Metallgehaltes abnehmen, so daß die gute Verteilbarkeit der Lösung erhalten bleibt, eine entsprechende Verkürzung der Sprühdauer führt jedoch dazu, daß die Schichtdicke sich nicht mit hinreichender Genauigkeit einstellen läßt.

Als Trägergas werden Stickstoff, Argon, Kohlenmonoxid, Kohlendioxid, Luft oder Gemische dieser Gase eingesetzt. Bevorzugt werden Stickstoff und Argon, denen gegebenenfalls Luft oder Sauerstoff zugesetzt wird. Das Trägergas dient in erster Linie zur Verteilung der Lösung. Es kann jedoch auch als reaktives Medium fungieren, indem man unter Zusatz von Luft oder Sauerstoff arbeitet und auf diese Weise bereits während des Sprühvorganges eine oxidische Schicht aufbaut. Die erforderliche Menge an Trägergas wird am besten experimentell bestimmt. Sie ist für die jeweils verwendete Sprühdüse charakteristisch, bei feiner Düseneinstellung läßt sich ein aerosolartiges Gas/Flüssigkeits-Gemisch erzeugen.

Die Dauer des Sprühvorganges ist in starkem Maße von der gewünschten Schichtdicke, aber auch von der Konzentration der Lösung und den gewünschten Eigenschaften der Beschichtung abhängig. Dünne metallische Schichten von z.B. 0,1 $\mu$m benötigen lediglich kurze Sprühzeiten, während dickere, oxidische Schichten mit einer Schichtdicke von beispielsweise 1 $\mu$m entsprechend größere Sprühzeiten erfordern. Die Sprühzeiten liegen in einem Bereich von 1 sec. bis 20 min.,

Das Sprühverfahren ermöglicht es, die gesamte Tandembeschichtung, also sowohl die Reflektor- als auch die Absorberschicht, aufzubauen. Reflektorschichten entstehen, wenn die erhitzte Oberfläche in Abwesenheit von Luft oder Sauerstoff besprüht wird und auch der Abkühlungsvorgang der gebildeten Schicht in Abwesenheit von Sauerstoff erfolgt. Enthält das Trägergas jedoch Sauerstoff oder wird bei mehrmaligem Besprühen zwischen den einzelnen Sprühvorgängen zur besprühten Oberfläche Sauerstoff zugeführt, so entstehen Absorberschichten. Im Falle einer unzureichenden Oxidation der metallischen Komponente während des Sprühvorganges an der erhitzten Oberfläche des Substrates kann die Absorberschicht anschließend in Gegenwart von Luft getempert und durch die so herbeigeführte Oxidation zusätzlich verbessert werden.

Die Beschichtungen lassen sich in ein- und derselben Apparatur entweder in Gegenwart geringer Sauerstoffmengen im Trägergas während des Sprühvorganges oder durch periodisch wiederholtes Aufheizen des bereits beschichteten Substrates in sauerstoffhaltiger Atmosphäre, gefolgt von jeweils einem erneuten Sprühvorgang,
erzeugen. Es ist allerdings auch möglich, die Tandemschichten in zwei oder mehreren hintereinandergeschalteten Apparaturen durchzuführen, wobei zunächst in
einer ersten Kammer in Abwesenheit von Sauerstoff
eine Reflektorschicht abgeschieden und darauf in einer
zweiten bzw. nachfolgenden Kammer die Absorberschichten aufgebracht werden.

Die Temperatur des zu beschichtenden Substrates beträgt
je nach Art des Substrates und Art der verwendeten
Metallverbindungen 50 bis 650°C; im allgemeinen erweisen
sich Temperaturen von 100 bis 350°C als ausreichend.

Als Substrat werden Metalle, oxidische Oberflächen,
Keramik oder auch Kunststoffe, wie Polyolefine, eingesetzt.

Um eine Gleichmäßigkeit der Abscheidung zu gewährleisten, muß der Abstand zwischen dem zu beschichtenden Substrat und der Düse, aus der die Lösung der thermisch zersetzbaren Metallverbindung gesprüht wird, konstand gehalten werden. Der erforderliche Abstand hängt
von der Form und Ausbildung des Sprühkegels ab und
ergibt sich aus der Einstellung und Beschaffenheit der
Düse. Er wird in der Regel experimentell ermittelt.

Zusatzstoffe, wie Emulgatoren, empfehlen sich dann,
wenn die Metallverbindung in dem verwendeten Lösungsmittel bzw. Lösungsmittelgemisch nicht ausreichend löslich ist bzw. die Grenzflächenspannung der Lösung bzw.
des Lösungsmittelgemisches herabgesetzt werden soll.
Beispiele für derartige Zusatzstoffe sind hochgradig

- 8 -

kationenaktive Emulgatoren, wie der handelsübliche Emulgator Praestol 444 K der Firma Stockhausen.


Beispiel 1

Die Beschichtungsapparatur besteht im wesentlichen aus einer Heiz- und einer Sprühvorrichtung. Die Heizvorrichtung dient zur Erhitzung des Substrates auf die erforderliche Zersetzungstemperatur.

Die Sprühvorrichtung ist horizontal und vertikal bewegbar und besitzt eine regulierbare Düse. Über zwei Zuführungsstutzen wird der Düse das Trägergas und die Lösung der thermisch zersetzbaren Metallverbindung zugefügt. Die Sprühvorrichtung saugt die Lösung aus einem Verratsbehälter mit Meßvorrichtung selbsttätig entsprechend der vorgegebenen Strömungsgeschwindigkeit des Trägergases und der jeweils eingestellten Durchsatzmenge an Lösung an, mischt sie mit dem Trägergas und versprüht sie auf den Probekörper. Gegebenenfalls kann das Trägergas in einem der Sprühvorrichtung vorgeschalteten Heizofen vorgewärmt werden. Der Abstand zwischen der Düse und dem zu beschichtenden Substrat wird konstant gehalten und beträgt in der Versuchsanordnung beispielsweise 7,5 cm.

| | |
|---|---|
| Substrat: | Vernickelter Stahlprobekörper, |
| Lösung : | 28 ml einer Lösung von Chromhexacarbonyl in Tetrahydrofuran (0.53 Gew.-% Cr, gerechnet als Metall), |
| Trägergas: | Argon, auf 70°C vorgewärmt, |
| Strömungsgeschwindigkeit: | 600 l/h, |
| Temp. des Substrates: | 300°C, |
| Sprühdauer: | 6 x je 20 sec., |

Aufheizvorgang:     Nach jedem Sprühvorgang erfolgt eine
                    Aufheizung des Substrates in Gegen-
                    wart von Luft über einen Zeitraum
                    von ca. 1 min.

Das mechanisch und chemisch gereinigte Substrat wird
auf die oben angegebene Temperatur aufgeheizt und jeweils 20 sec. lang mit der oben angegebenen Lösung
besprüht. Das Lösungsmittel trifft zusammen mit dem
Trägergas auf das erhitzte Substrat auf. Durch Verdampfung des Lösungsmittels und durch Erwärmung des
das Substrat umstreichenden Trägergases wird das Substrat abgekühlt. Nach Abschluß des Sprühvorganges wird
das Substrat in Gegenwart von Luft wieder auf die vorgegebene Temperatur erhitzt.

Während des Aufheizens erfolgt die Oxidation der aufgesprühten Schichten. Es wird sechsmal gesprüht und
entsprechend sechsmal aufgeheizt.

Nach Abkühlen des beschichteten Probekörpers an der
Luft wird eine festhaftende, gleichmäßig oxidische Beschichtung mit einem $\alpha$-Wert von 0,84 und einem $\epsilon$-Wert von
0,12 erhalten, die sich als Absorberschicht für Solarkollektoren eignet.

Die in Beispiel 1 beschriebene Beschichtungsapparatur
findet in allen nachfolgend beschriebenen Beispielen
Verwendung. Die Strömungsgeschwindigkeit des Trägergases beträgt in allen Beispielen einheitlich 600 1/h,
lediglich in Beispiel 27 beträgt sie 500 1/h.

- 10 -

Beispiel 2

| | |
|---|---|
| Substrat: | Wie Beispiel 1 |
| Lösung: | " |
| Trägergas; | " |
| Temperatur des Substrates: | 170°C, |
| Sprühdauer | 4 x je 30 sec., |
| Aufheizvorgang: | Wie Beispiel 1, jedoch in Abwesenheit von Sauerstoff. |

Die Oxidation der aufgebrachten Schicht erfolgt während des Abkühlvorganges.

Nach Abkühlen des beschichteten Probekörpers an der Luft wird eine festhaftende, geschlossene und gleichmäßig oxidische Absorberschicht mit guter Selektivität erhalten.

Beispiel 3

| | |
|---|---|
| Substrat: | Stahlprobekörper, |
| Lösung: | 28 ml einer Lösung von Chromhexacarbonyl in Tetrahydrofuran (2,36 Gew.-% Cr, gerechnet als Metall), |
| Trägergas: | Wie Beispiel 1, |
| Temperatur des Substrates: | 300°C, |
| Sprühdauer: | 4 x je 30 sec., |
| Aufheizvorgang: | Wie Beispiel 1. |

- 11 -

Nach Abkühlung des beschichteten Probekörpers an der Luft wird eine festhaftende, geschlossene und gleichmäßig oxidische Schicht mit guter Selektivität erhalten.

Beispiel 4:

| Substrat: | Vernickelter Stahlprobekörper |
| Lösung: | 28 ml einer Lösung von Molybdänhexacarbonyl in Tetrahydrofuran (0,81 Gew.-% Mo, gerechnet als Metall), |
| Trägergas: | Wie Beispiel 1, |
| Temperatur des Substrates: | 150°C, |
| Sprühdauer: | 4 x je 30 sec., |
| Aufheizvorgang: | Wie Beispiel 1, jedoch in Abwesenheit von Sauerstoff |

Die Oxidation der aufgebrachten Schicht erfolgt während des Abkühlvorganges. Nach Abkühlen des beschichteten Probekörpers an der Luft wird eine festhaftende, geschlossene und gleichmäßig oxidische Beschichtung mit einer α-Wert von 0,93 und einem ε-Wert von 0,14 erhalten.

Beispiel 5

| Substrat: | Stahlprobekörper, |
| Lösung: | 28 ml einer Lösung von Molybdänhexacarbonyl in Tetrahydrofuran (0,81 Gew.-% Mo, gerechnet als Metall), |
| Temperatur des Substrateß | 150°C, |
| Sprühdauer: | 4 x je 30 sec., |
| Aufheizvorgang: | Wie Beispiel 1, jedoch in Abwesenheit von Sauerstoff |

0147603
E. 1959

Die Oxidation der aufgebrachten Schicht erfolgt während des Abkühlvorganges. Nach Abkühlen des beschichteten Probekörpers an der Luft wird eine festhaftende, geschlossene und gleichmäßig oxidische Beschichtung erhalten, die als Absorberschicht gut geeignet ist.

Beispiel 6

| | |
|---|---|
| Substrat: | Vernickelter Stahlprobekörper, |
| Lösung: | 20 ml eine Lösung von Dikobaltoctacarbonyl in Tetrahydrofuran (1,0 Gew.-% Co, gerechnet als Metall), |
| Trägergas: | Stickstoff, auf 30°C vorgewärmt, |
| Temperatur des Substrates: | 130°C, |
| Sprühdauer: | 2 x je 30 sec., |
| Aufheizvorgang: | Wie Beispiel 1, jedoch in Abwesenheit von Sauerstoff |

Die Oxydation der aufgebrachten Schicht erfolgt während des Abkühlvorganges. Nach Abkühlen des beschichteten Probekörpers an der Luft wird eine festhaftende, geschlossene und gleichmäßig oxidische Beschichtung erhalten, die einen a-Wert von 0,85 und einen $\xi$-Wert von 0,08 aufweist.

Beispiel 7:

| | |
|---|---|
| Substrat: | Stahlprobekörper, |
| Lösung: | 28 ml einer Lösung von Dikobaltoctacarbonyl in Tetrahydrofuran (1,0 Gew.-% Co, gerechnet als Metall), |
| Trägergas: | Stickstoff mit 0,1 Vol.-% Sauerstoff, auf 30°C vorgewärmt. |

| Temperatur des Substrates: | $300^{\circ}C$, |
| Sprühdauer: | 4 x je 30 sec., |
| Aufheizvorgang: | Wie Beispiel 1. |

Nach Abkühlen des beschichteten Probekörpers an der Luft wird eine festhaftende, geschlossene und gleichmäßig oxidische Beschichtung erhalten, die einen $\alpha$-Wert von 0,84 und einen $\xi$-Wert von 0,20 aufweist.

Beispiel 8:

| Substrat: | Vernickelter Stahlprobekörper, |
| Lösung: | Wie Beispiel 1, jedoch 25 ml, |
| Trägergas: | Argon mit 0,1 Vol.-% Sauerstoff, auf $70^{\circ}C$ vorgewärmt, |
| Temperatur des Substrates: | $260^{\circ}C$, |
| Sprühdauer: | 4 x je 30 sec., |
| Aufheizvorgang: | Wie Beispiel 1, jedoch in Abwesenheit von Sauerstoff |

Die Oxidation der aufgebrachten Schicht erfolgt während des Abkühlvorganges. Nach Abkühlen des beschichteten Probekörpers an der Luft wird eine festhaftende, geschlossene und gleichmäßig oxidische Beschichtung erhalten, die einen $\alpha$-Wert von 0.92 und einen $\xi$-Wert von 0,22 aufweist.

Beispiel 9:

| Substrat: | Vernickelter Stahlprobekörper, |
| Lösung: | 40 ml einer Lösung von Chromhexacarbonyl in Dioxan (0,58 Gew-% Cr, gerechnet als Metall), |

| Trägergas: | Stickstoff mit 0,1 Vol.-% Sauerstoff, auf 70°C vorgewärmt, |
| Temperatur des Substrates: | 300°C, |
| Sprühdauer: | 6 x je 30 sec., |
| Aufheizvorgang: | Wie Beispiel 1. |

Nach Abkühlen des beschichteten Probekörpers an der Luft wird eine festhaftende, geschlossene und gleichmäßig oxidische Absorberschicht mit guter Selektivität erhalten.

Beispiel 10

| Substrat: | Vernickelter Stahlprobekörper, |
| Lösung: | 35 ml einer Lösung von Molybdänhexacarbonyl in Isooctan (0,89 Gew.-% Mo, gerechnet als Metall), |
| Trägergas: | Stickstoff, auf 70°C vorgewärmt, |
| Temperatur des Substrates: | 300°C, |
| Sprühdauer: | 5 x je 30 sec., |
| Aufheizvorgang: | Wie Beispiel 1. |

Nach Abkühlen des beschichteten Probekörpers an der Luft wird eine festhaftende, geschlossene und gleichmäßig oxidische Beschichtung erhalten, die in ihren Eigenschaften der in Beispiel 4 erhaltenen Beschichtung entspricht.

Beispiel 11:

| | |
|---|---|
| Substrat: | Stahlprobekörper, |
| Lösung: | 28 ml einer Lösung von Kobalt-2-ethylhexanoat in Tetrahydrofuran (0,6 Gew.-% Co, gerechnet als Metall), |
| Temperatur des Substrates: | 300°C, |
| Sprühdauer: | 4 x je 30 sec., |
| Aufheizvorgang: | Wie Beispiel 1. |

Nach Abkühlen des beschichteten Probekörpers an der Luft wird eine festhaftende, geschlossene und gleichmäßig oxidische Beschichtung erhalten.

Beispiel 12:

(Vergleichsversuch)

| | |
|---|---|
| Substrat: | Stahlprobekörper, |
| Lösung: | 10 ml einer Lösung von Chromhexacarbonyl in Diethylenglykoldimethylether (0,47 Gew.-% Cr, gerechnet als Metall), |
| Trägergas: | Stickstoff, auf 70°C vorgewärmt. |
| Temperatur des Substrates: | 300°C, |
| Sprühdauer: | 5 x je 30 sec., |
| Aufheizvorgang: | Wie Beispiel 1. |

Nach Abkühlen des beschichteten Probekörpers an der Luft wird eine wenighaftende und ungleichmäßige Schicht mit einem $\alpha$-Wert von 0,69 und einem $\xi$-Wert von 0,16 erhalten. Sie ist für die Herstellung von Solarkollektoren nicht geeignet.

Beispiele 13 bis 28:

Es wird mit der in Beispiel 1 beschriebenen Apparatur gearbeitet, wobei verschiedenartige Metallverbindungen und Lösungsmittel sowie die Sprühzeit und die Temperatur des Substrates variiert werden. Die Versuchsdurchführung und die Versuchsergebnisse sind in den Tabellen 1 und 2 zusammengestellt.

Die Beispiele 13, 14, 15 und 16 in Tabelle 1 betreffen die Herstellung von Reflektorschichten. In Beispiel 13 wird eine metallisch goldfarbene, in Beispiel 14 eine metallisch dunkelblaue, in Beispiel 15 eine metallisch bläulich-silberne und in Beispiel 16 eine metallisch gelbe Reflektorschicht erhalten.

Die Beispiele 17 bis 28 in Tabelle 2 betreffen die Herstellung von Absorberschichten. In Beispiel 23 wird ein Co/Ni-Mischsalz, das ein Molverhältnis Co : Ni von 0,88 : 1 aufweist, als Metallverbindung eingesetzt.

In Beispiel 25 wird als Lösungsmittel ein Gemisch aus 70 Gew.-% Methylenchlorid und 30 Gew.-% Chloroform (MC 73) verwendet. Die resultierende Beschichtung erweist sich aufgrund der schlechten Haftfestigkeit als nicht geeignet, ein Zusatz eines handelsüblichen Emulgators, wie Praestol 444 K der Firma Stockhausen, führt jedoch zu einer bedeutend besseren Haftfestigkeit (s. Beispiel 26).

Die in Beispiel 27 unter Verwendung von Diethylenglykolmonoethylether (DEGMEE) als Lösungsmittel hergestellte Beschichtung eignet sich aufgrund schlechter Haftfestigkeit nicht als Absorberschicht.

In Beispiel 28 wird eine Lösung von $Cr(CO)_6$ und $Mo(CO)_6$ (Mol-Verhältnis Cr : Mo = 1,0 : 0,8) in Tetrahydrofuran (THF) verwendet.

In den Tabellen 1 und 2 steht unter der Spalte "Substrat" 1 für Stahlprobekörper, 2 für vernickelte Stahlprobekörper und 3 für einen hochmolekularen Polyethylenprobekörper. Die Strömungsgeschwindigkeit des Trägergases beträgt in allen Beispielen der Tabellen 1 und 2 einheitlich 600 1/h.

Die in Tabelle 2 unter "Metallverbindung" aufgeführte Abkürzung 2-EH steht für 2-Ethylhexanoat.

In den Spalten "Haftfestigkeit" und "Gleichmäßigkeit der Schicht" steht ++ für sehr gut, + für gut und - für mangelhaft.

Beispiel 29:

Herstellung der Reflektorschicht:

| | |
|---|---|
| Substrat: | Stahlprobekörper, |
| Lösung: | 7 ml einer Lösung von Molybdänhexacarbonyl in Tetrahydrofuran (0,81 Gew.-% Mo, gerechnet als Metall), |
| Trägergas: | Stickstoff, auf 90°C vorgewärmt, |
| Strömungsgeschwindigkeit: | 600 1/h, |
| Temperatur des Substrates | 300°C, |
| Sprühdauer: | 1 x 30 sec., |
| Aufheizvorgang: | Wie Beispiel 1, jedoch in Abwesenheit von Sauerstoff |

- 18 -

Herstellung der Absorberschicht (erfolgt unmittelbar nach Herstellung der Reflektorschicht):

| | |
|---|---|
| Substrat: | Stahlprobekörper, der die vorstehend beschriebene Reflektorschicht aus Molybdän aufweist, |
| Lösung: | 28 ml einer Lösung von Chromhexacarbonyl in Tetrahydrofuran (0,53 Gew.-% Cr, gerechnet als Metall), |
| Trägergas: | Stickstoff, auf 90°C vorgewärmt, |
| Strömungsgeschwindigkeit: | 600 l/h, |
| Temperatur des Substrates: | 300°C, |
| Sprühdauer: | 4 x je 30 sec., |
| Aufheizvorgang: | Wie Beispiel 1. |

Nach Abkühlen des beschichteten Probekörpers an der Luft wird eine festhaftende, geschlossene und gleichmäßig oxidische Beschichtung erhalten, die einen $\alpha$-Wert von 0,81 und einen $\xi$-Wert von 0,20 aufweist.

**Tabelle 1**

| Beispiel | 13 | 14 | 15 | 16 |
|---|---|---|---|---|
| Metall-verbindung | Cr(CO)$_6$ | Cr(CO)$_6$ | Cr(CO)$_6$ | Cr(CO)$_6$ |
| Lösungsmittel | THF | THF | THF | THF |
| Konz. d. Lsg. (Gew.-%, gerechnet als Metall) | 0,58 | 0,58 | 0,58 | 0,58 |
| Gesamtmenge in ml | 2 | 4 | 6 | 9 |
| Trägergas | Ar | Ar | Ar | Ar |
| Temperatur des Substrates in °C | 300 | 300 | 300 | 300 |
| Sprühdauer in Sekunden | 1 x 10 | 1 x 20 | 1 x 30 | 1 x 45 |
| Substrat | 1 | 1 | 1 | 1 |
| Haftfestigkeit | ++ | ++ | ++ | ++ |
| Gleichmäßigkeit der Schicht | + | + | + | + |
| Schichtdicke in /um | 0,01 | 0,05 | 0,1 | 0,1 |
| Temp. des Trägergases in °C | 85 | 85 | 85 | 85 |

Tabelle 2

| Beispiel | Metall-verbindung | Lösungs-mittel | Konz. d. Lsg. (Gew.-%, gerechnet als Metall) | Gesamtmenge in ml | Trägergas | Temperatur des Substrates in °C | Sprühdauer in Sekunden | Substrat | Haftfestigkeit | Gleichmäßigkeit der Schicht | Schichtdicke in /um | Temp. des Träger-gases in °C |
|---|---|---|---|---|---|---|---|---|---|---|---|---|
| 17 | Co-2EH | Isooctan | 0,6 | 56 | Luft | 300 | 8 x 30 | 1 | ++ | + | 1,5 | 70 |
| 18 | Co-2EH | Dioxan | 0,6 | 42 | $N_2$ | 300 | 6 x 30 | 1 | ++ | + | 1,2 | 60 |
| 19 | Co-2EH | Isooctan | 0,6 | 56 | $N_2$ | 300 | 8 x 30 | 1 | ++ | + | 1,5 | 65 |
| 20 | Mo-2EH | Dioxan | 0,6 | 35 | $N_2$ | 310 | 5 x 30 | 2 | ++ | + | 1,0 | 60 |
| 21 | $W(CO)_6$ | Isooctan | 1,2 | 42 | $N_2$ | 300 | 6 x 30 | 2 | ++ | + | 1,2 | 60 |
| 22 | $W(CO)_6$ | Dioxan | 1,2 | 42 | $N_2$ | 200 | 6 x 30 | 2 | ++ | + | 1,2 | 60 |
| 23 | Co-Ni-citrat | Dioxan | 0,49 Co 0,55 Ni | 42 | $N_2$ | 350 | 6 x 30 | 1 | ++ | + | 1,2 | 85 |
| 24 | $Co_2(CO)_8$ | THF | 1,0 | 14 | $N_2$ | 100 | 1 x 60 | 3 | ++ | + | 0,2 | 20 |
| 25 | $Co_2(CO)_8$ | MC 73 | 1,0 | 10 | $N_2$ | 100 | 1 x 60 | 2 | - | - | 0,1 | 20 |

· 2o ·

0147603 9

## T a b e l l e 2 (Fortsetzung)

| Beispiel | Metall-verbindung | Lösungs-mittel | Konz. d. Lsg. (Gew.-%, gerechnet als Metall) | Gesamtmenge in ml | Trägergas | Temperatur des Substrates in °C | Sprühdauer in Sekunden | Substrat | Haftfestigkeit | Gleichmäßigkeit der Schicht | Schichtdicke in /um | Temp. des Trägergases in °C |
|---|---|---|---|---|---|---|---|---|---|---|---|---|
| 26 | $Co_2(CO)_8$ | MC 73 + 0,5 % Emulgator | 1,0 | 10 | $N_2$ | 100 | 1 x 60 | 2 | + | + | 0,1 | 20 |
| 27 | $Mo(CO)_6$ | DEGMEE | 1,1 | 35 | $N_2$ | 290 | 5 x 30 | 1 | - | - | 1,0 | 20 |
| 28 | $Cr(CO)_6$ + $Mo(CO)_6$ | THF | 0,26 Cr 0,40 Mo | 20 | Ar | 300 | 3 x 30 | 2 | ++ | + | 0,4 | 60 |

- 22 -

0147603
B. 1959

0147603

Oberhausen 11, 23.11.1983
PLD - bin/breu  R. 1959

Ruhrchemie Aktiengesellschaft, Oberhausen 11

## Patentansprüche

1.) Verwendung von Beschichtungen, die durch einmaliges oder mehrmaliges Aufsprühen von thermisch zersetzbaren, in organischen Lösungsmitteln oder Lösungsmittelgemischen gelösten Metallverbindungen mittels eines gegebenenfalls Luft oder Sauerstoff enthaltenden Trägergases auf eine erhitzte Oberfläche und - sofern in Abwesenheit von Sauerstoff gearbeitet wurde - gegebenenfalls nachfolgende Oxidation der besprühten Oberfläche mittels Luft oder Sauerstoff hergestellt werden, als aus Reflektor und Absorberschicht bestehender Tandemschicht für die fotothermische Umwandlung von Sonnenlicht.

2.) Verwendung von Beschichtungen nach Anspruch 1, dadurch gekennzeichnet, daß den organischen Lösungsmitteln oder Lösungsmittelgemischen ein Additiv zur Herabsetzung der Grenzflächenspannung zugesetzt wird.

3.) Verwendung von Beschichtungen nach Anspruch 1 und 2, dadurch gekennzeichnet, daß als organische Lösungsmittel oder Lösungsmittelgemische aliphatische oder cycloaliphatische Ether und/oder Kohlenwasserstoffe eingesetzt werden.

4.) Verwendung von Beschichtungen nach Anspruch 1 bis 3, dadurch gekennzeichnet, daß als thermisch zersetzbare Metallverbindungen Metallcarbonyle, Metallcarboxylate und Metallalkoholate eingesetzt werden.